# EUROPEAN PATENT APPLICATION

(11) **EP 4 815 423 A1**
(43) Date of publication of application: **30.09.2026**
(21) Application number: 25192484.1
(22) Date of filing: 29.07.2025
(51) Int. Cl.: H04N 1/00, B41J 11/00, G03G 15/00, G06F 3/12, G06K 15/02, H04N 1/60

(54) **IMAGE FORMING APPARATUS**

(30) Priority: 26.03.2025 JP 2025052602
(71) Applicant: FUJIFILM Business Innovation Corp., Minato-ku Tokyo (JP)
(72) Inventor: TANAKA, Shogo, Yokohama-shi, Kanagawa (JP); SUGATA, Tomokazu, Yokohama-shi, Kanagawa (JP); MATSUBARA, Koichi, Yokohama-shi, Kanagawa (JP)
(74) Representative: Becker Kurig & Partner Patentanwälte mbB

(57) **Abstract**

An apparatus includes a processor configured to acquire a recording medium size which is a size of a recording medium on which printing is to be performed, acquire a document size which is a size of a document which is a region where printing is performed on the recording medium, acquire, based on the recording medium size and the document size, a margin size which is a size of a margin between the recording medium and the document, determine, based on the margin size, a width of a tone patch for correction of a density in the printing, and cause the apparatus to print the tone patch of the determined width on the recording medium.

## Description

### BACKGROUND OF THE INVENTION

### (i) Field of the Invention

The present invention relates to an apparatus.

### (ii) Description of Related Art

Disclosed in JP2021-109325A is a configuration in which information on the size of an output paper sheet on which a printing target image is output is acquired and the printing target image combined with tone patches, of which the number of steps is determined based on the acquired information, is output onto the output paper sheet.

Disclosed in JP2022-123899A is a configuration in which density information is acquired from image information of a printing target image and the width of a tone patch for image formation in a sheet material transportation direction is determined based on the acquired density information.

### SUMMARY OF THE INVENTION

For example, there is a technique that suppresses a variation in image quality between recording mediums in a case where printing is consecutively performed on the recording mediums by an image forming apparatus. In an example of such a technique, a tone patch is printed on a recording medium on which printing is performed, the printed tone patch is read, and density correction is performed for a recording medium, on which printing is to be performed next, based on a result obtained by reading the tone patch.

Here, in a case where a document margin between the recording medium and a document, which is a region where printing is performed on the recording medium, is narrow, a general tone patch cannot be printed in some cases. Meanwhile, in a case where the width of a tone patch is decreased, for example, there is a large variation in density or the like, which is likely to cause a problem regarding tone patch reading performance.

An object of the present invention is to print a tone patch in accordance with a document margin.

According to a first aspect of the present disclosure, there is provided an apparatus including a processor configured to acquire a recording medium size which is a size of a recording medium on which printing is to be performed, acquire a document size which is a size of a document which is a region where printing is performed on the recording medium, acquire, based on the recording medium size and the document size, a margin size which is a size of a margin between the recording medium and the document, determine, based on the margin size, a width of a tone patch for correction of a density in the printing, and cause the apparatus to print the tone patch of the determined width on the recording medium.

According to a second aspect of the present disclosure, in the apparatus according to the first aspect, the width of the tone patch may be determined based on a value that is determined based on a distance from an end of the recording medium to the tone patch and the width of the tone patch and the margin size.

According to a third aspect of the present disclosure, in the apparatus according to the second aspect, the value may be determined to be (the distance from the end of the recording medium to the tone patch) × 2, and the margin size may be determined to be (the recording medium size - the document size) ÷ 2.

According to a fourth aspect of the present disclosure, in the apparatus according to the first aspect, the width of the tone patch may be a length in a direction intersecting a direction in which the recording medium is transported.

According to a fifth aspect of the present disclosure, in the apparatus according to the fourth aspect, the length may be a length in a direction from an end of the document to an end of the recording medium.

According to a sixth aspect of the present disclosure, in the apparatus according to the fifth aspect, the length may be 3 mm or less.

According to a seventh aspect of the present disclosure, in the apparatus according to the first aspect, information on an image-formable region in an image forming apparatus that performs printing on the recording medium may be acquired, and the width of the tone patch may be determined such that the tone patch is positioned within the image-formable region of the margin size obtained based on the recording medium size and the document size.

According to an eighth aspect of the present disclosure, in the apparatus according to the seventh aspect, the document size may be a size after processing of the recording medium.

According to the first aspect of the present disclosure, it is possible to print a tone patch in accordance with a document margin.

According to the second aspect of the present disclosure, a tone patch that fits in a margin of the recording medium can be stably disposed.

According to the third aspect of the present disclosure, the width of the tone patch can be determined based on a consistent standard.

According to the fourth aspect of the present disclosure, the tone patch can be adjusted in a direction that does not interfere with a printing region.

According to the fifth aspect of the present disclosure, the printing region can be prevented from being hindered in a case where the length of the tone patch is adjusted.

According to the sixth aspect of the present disclosure, the tone patch can be formed even in a case where a margin is small.

According to the seventh aspect of the present disclosure, the tone patch can be printed in a printing-possible region.

According to the eighth aspect of the present disclosure, the tone patch can be performed without influence after processing.

### BRIEF DESCRIPTION OF THE DRAWINGS

Exemplary embodiment(s) of the present invention will be described in detail based on the following figures, wherein:
FIG. 1 is a view showing an overall configuration of an image forming system;
FIG. 2 is a diagram showing a hardware configuration example of a control unit;
FIG. 3 is a view for description of an image forming apparatus;
FIG. 4 is a view for description of tone patches formed on a paper sheet;
FIGS. 5A and 5B are views for description of an example of individual tone patches to be formed on the paper sheets;
FIG. 6 shows the flow of processing until the printing of tone patches;
FIG. 7 shows the flow until density correction performed for a paper sheet, on which printing is to be performed next, based on read information of the tone patches;
FIGS. 8A and 8B are examples of screens provided to a user in a case where during-job correction is performed; and
FIG. 9 is a table showing the result of comparison between a standard patch and a narrow patch in terms of reading accuracy.

### DETAILED DESCRIPTION OF THE INVENTION

Hereinafter, an exemplary embodiment of the present disclosure will be described with reference to the accompanying drawings.

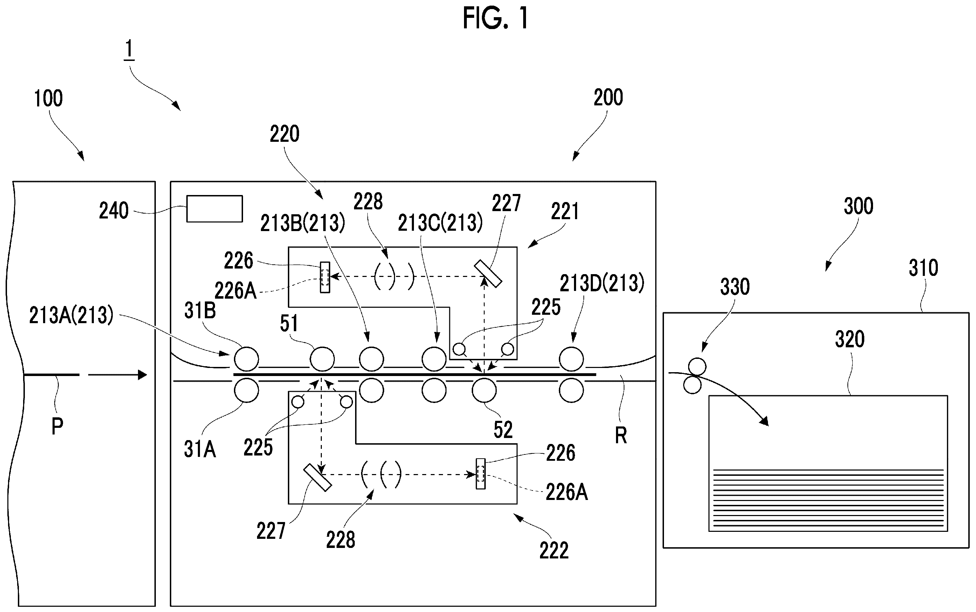

FIG. 1 is a view showing an overall configuration of an image forming system 1.

The image forming system 1 of the present exemplary embodiment is provided with an image forming apparatus 100 that forms an image on a paper sheet, an inspection apparatus 200 that inspects the image on the paper sheet that is formed by the image forming apparatus 100, and a paper sheet accommodation apparatus 300 that accommodates the paper sheet discharged from the inspection apparatus 200. The image forming apparatus 100 is an example of an apparatus.

The image forming system 1 has a function of inspecting an image formed on a paper sheet and can be regarded as an image inspection system.

In addition, the inspection apparatus 200 has a function of transporting a paper sheet, which is an example of a recording medium, and can be regarded as a paper sheet transportation apparatus. In addition, the inspection apparatus 200 has a function of reading an image formed on a paper sheet and can be regarded as an image reading apparatus.

The image forming apparatus 100 that functions as a unit for image formation acquires, from a personal computer (PC) (not shown), image data which is a source of an image to be formed.

The image forming apparatus 100 forms, based on the acquired image data, the image on a paper sheet by using a material such as toner.

Note that a mechanism for formation of the image on the paper sheet is not particularly limited. For the formation of the image on the paper sheet, for example, an electrophotographic method or an inkjet method is used.

The inspection apparatus 200 is provided with a paper sheet transportation path R through which a paper sheet discharged from the image forming apparatus 100 is transported.

In addition, the inspection apparatus 200 is provided with a plurality of transportation rolls 213, which are examples of transportation units that transport a paper sheet along the paper sheet transportation path R. In the present exemplary embodiment, a paper sheet is transported to a downstream side by the plurality of transportation rolls 213.

In the present exemplary embodiment, an upstream transportation roll 213A, which is disposed closest to an upstream side in a paper sheet transportation direction, is provided as the transportation roll 213. In addition, a downstream transportation roll 213D is provided closest to a downstream side in the paper sheet transportation direction.

Furthermore, a first intermediate transportation roll 213B and a second intermediate transportation roll 213C, which is disposed downstream of the first intermediate transportation roll 213B, are provided between the upstream transportation roll 213A and the downstream transportation roll 213D.

Each of the transportation rolls 213 is composed of a driving roll 31A that performs a rotationally driving operation and a driven roll 31B that is pressed against the driving roll 31A and that rotates with a driving force received from the driving roll 31A.

The driven roll 31B receives the driving force from the driving roll 31A at a contact portion where the driving roll 31A and the driven roll 31B come into contact with each other. The driven roll 31B rotates with the driving force received from the driving roll 31A as the driving roll 31A rotates.

In addition, the inspection apparatus 200 is provided with image reading units 220 that read an image formed on a paper sheet.

In the present exemplary embodiment, an upper image reading unit 221 and a lower image reading unit 222 which are examples of an image reader unit are provided as the image reading units 220.

The upper image reading unit 221 is disposed above the paper sheet transportation path R. The upper image reading unit 221 reads an image formed on an upper surface, which is an example of one of two surfaces of the paper sheet.

In addition, the lower image reading unit 222 is disposed below the paper sheet transportation path R. The lower image reading unit 222 reads an image formed on a lower surface, which is an example of the other of the two surfaces of the paper sheet.

Furthermore, the inspection apparatus 200 is provided with a control unit 240. The control unit 240 controls each unit provided in the inspection apparatus 200.

Each of the upper image reading unit 221 and the lower image reading unit 222 is provided with a light source 225 that irradiates a paper sheet with light, a light receiving unit 226 that receives reflected light from the paper sheet, and a light reflection member 227 that reflects the reflected light from the paper sheet and directs the reflected light to the light receiving unit 226.

The light receiving unit 226 is provided with a plurality of light receiving elements 226A composed of photodiodes or the like, and the reflected light from the paper sheet is received by the plurality of light receiving elements 226A.

The plurality of light receiving elements 226A are arranged along one direction. Specifically, the light receiving elements 226A are arranged along a direction orthogonal to the paper surface of FIG. 1.

In other words, the plurality of light receiving elements 226A are arranged along a direction orthogonal to the paper sheet transportation direction in the inspection apparatus 200 and orthogonal to a thickness direction of a paper sheet to be transported.

In addition, each of the upper image reading unit 221 and the lower image reading unit 222 is provided with an image formation optical system 228 such as a lens that causes reflected light from the light reflection member 227 to form an image on the light receiving unit 226.

In the present exemplary embodiment, each of the upper image reading unit 221 and the lower image reading unit 222 is an image reading unit including an optical reduction system.

In addition, in the present exemplary embodiment, an upper rotary body 51 that is rotatable is provided on a side opposite to a side on which the lower image reading unit 222 is installed, with the paper sheet transportation path R interposed therebetween. In addition, a lower rotary body 52 that is rotatable is provided on a side opposite to a side on which the upper image reading unit 221 is installed, with the paper sheet transportation path R interposed therebetween.

Furthermore, in the present exemplary embodiment, a driving motor (not shown) that is a driving source for rotation of the upper rotary body 51 and a driving motor (not shown) that is a driving source for rotation of the lower rotary body 52 are provided.

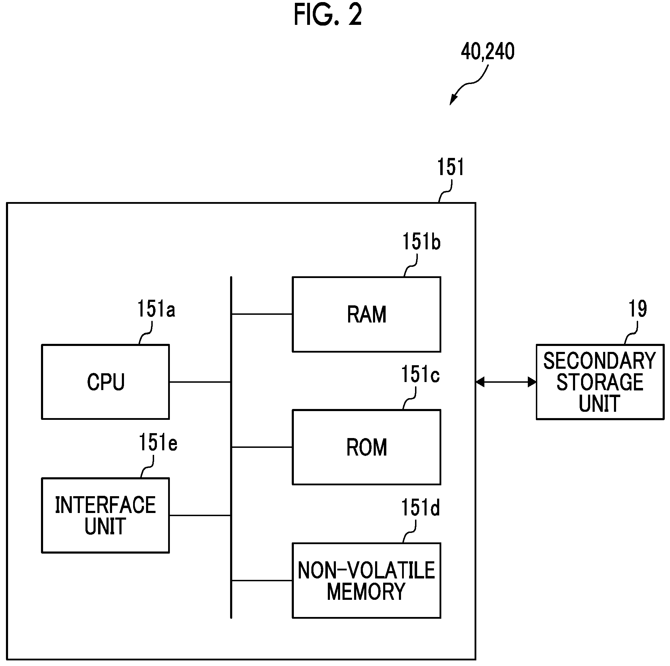

FIG. 2 is a diagram showing a hardware configuration example of a control unit 40 or the control unit 240. The control unit 40 or the control unit 240 is realized by a computer.

The control unit 40 or the control unit 240 includes an arithmetic processing unit 151 that executes digital arithmetic processing according to a program, and a secondary storage unit 19 that stores information.

The secondary storage unit 19 is realized by, for example, an existing information storage device, such as a hard disk drive (HDD), a semiconductor memory, or a magnetic tape.

The arithmetic processing unit 151 is provided with a CPU 151a which is an example of a processor.

In addition, the arithmetic processing unit 151 is provided with a RAM 151b used as a working memory or the like of the CPU 151a and a ROM 151c in which programs or the like executed by the CPU 151a are stored.

In addition, the arithmetic processing unit 151 is provided with a non-volatile memory 151d that is configured to be rewritable and can hold data even in a case where power supply is interrupted and an interface unit 151e that controls each unit, such as a communication unit, connected to the arithmetic processing unit 151.

The non-volatile memory 151d is composed of, for example, a battery-backed SRAM or a flash memory. The secondary storage unit 19 stores various types of information such as a program executed by the arithmetic processing unit 151.

In the present exemplary embodiment, the arithmetic processing unit 151 reads the program stored in the ROM 151c or the secondary storage unit 19, so that processing performed in the inspection apparatus 200 is executed.

The program to be executed by the CPU 151a may be provided to the inspection apparatus 200 in a state of being stored in a computer-readable recording medium such as a magnetic recording medium (a magnetic tape, a magnetic disk, or the like), an optical recording medium (an optical disk or the like), a magnetooptical recording medium, or a semiconductor memory. In addition, the program to be executed by the CPU 151a may be provided to the inspection apparatus 200 by using communication means such as the internet.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The image forming system 1 will be further described with reference to FIG. 1.

The paper sheet accommodation apparatus 300 is provided with a housing 310. In addition, the paper sheet accommodation apparatus 300 is provided with a paper sheet stacking portion 320.

The paper sheet stacking portion 320 is installed in the housing 310, and in the present exemplary embodiment, paper sheets sequentially discharged from the inspection apparatus 200 are stacked in the paper sheet stacking portion 320.

Furthermore, the paper sheet accommodation apparatus 300 is provided with a feeding roller 330 that feeds a paper sheet discharged from the inspection apparatus 200 to the paper sheet stacking portion 320.

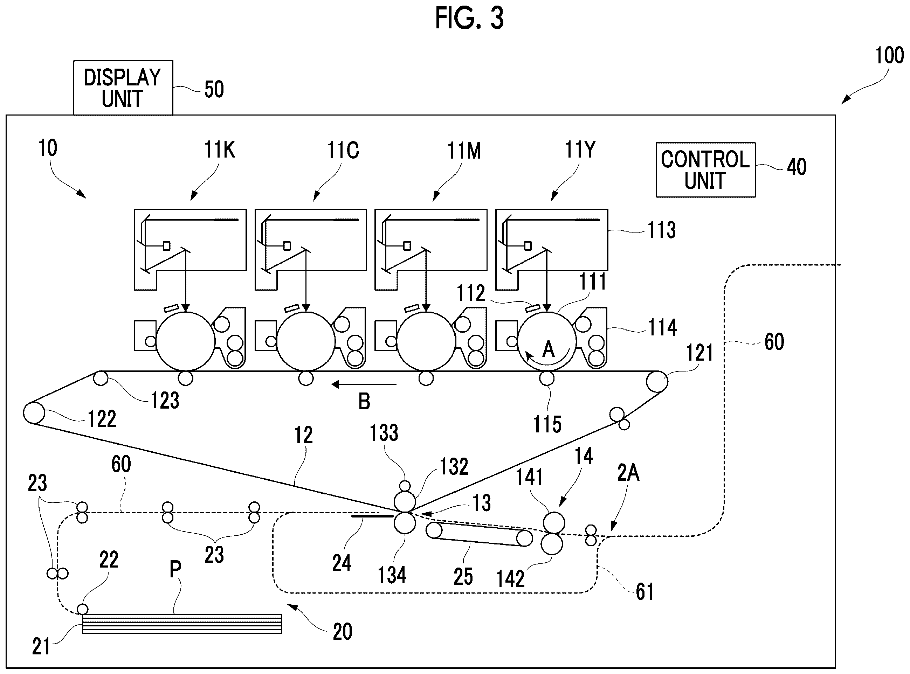

FIG. 3 is a view for description of the image forming apparatus 100.

Note that FIG. 3 shows an example of the image forming apparatus 100 and the apparatus configuration of the image forming apparatus 100 is not limited to the apparatus configuration shown in FIG. 3. The image forming apparatus 100 shown in FIG. 3 is an apparatus that forms an image by using a so-called electrophotographic method. However, the image forming apparatus 100 may also be an apparatus that forms an image by using, for example, an inkjet method.

Furthermore, the image forming apparatus 100 may also be an apparatus that forms an image by using a method other than the electrophotographic method and the inkjet method.

The image forming apparatus 100 is provided with an image formation unit 10, a paper sheet transportation unit 20, the control unit 40 that controls each unit, and a display unit 50 that receives various operations from a user.

The image formation unit 10 includes image forming units 11 (11Y, 11M, 11C, and 11K), an intermediate transfer belt 12, a secondary transfer unit 13, and a fixer 14.

In the present exemplary embodiment, four image forming units 11Y, 11M, 11C, and 11K respectively corresponding to toners of four colors which are yellow (Y), magenta (M), cyan (C), and black (K) are provided as the image forming units 11.

The four image forming units 11Y, 11M, 11C, and 11K are arranged in a movement direction of the intermediate transfer belt 12 and electrophotographically form toner images.

Each of the four image forming units 11Y, 11M, 11C, and 11K is provided with a photoconductor drum 111, a charging unit 112, an exposure unit 113, a developing unit 114, and a primary transfer unit 115.

Each of the four image forming units 11Y, 11M, 11C, and 11K forms a toner image of any color of Y, M, C, and K and transfers the formed toner image to the intermediate transfer belt 12. Accordingly, a toner image obtained by superimposing toner images of respective colors which are Y, M, C, and K onto each other is formed on the intermediate transfer belt 12.

Each photoconductor drum 111 rotates in a direction along an arrow A in the drawing at a speed determined in advance. The charging units 112 charge peripheral surfaces of the photoconductor drums 111 at a potential determined in advance. The exposure units 113 irradiate the charged peripheral surfaces of the photoconductor drums 111 with light and form electrostatic latent images on the peripheral surfaces of the photoconductor drums 111.

The developing units 114 cause toners to adhere to the electrostatic latent images formed on the peripheral surfaces of the photoconductor drums 111, so that toner images are formed. The primary transfer units 115 transfer, to the intermediate transfer belt 12, the toner images formed on the peripheral surfaces of the photoconductor drums 111.

A voltage of which the polarity is opposite to toner charging polarity is applied to the primary transfer units 115. Accordingly, the toner images formed on the peripheral surfaces of the photoconductor drums 111 are sequentially electrostatically attracted onto the intermediate transfer belt 12. As a result, color toner images superimposed to form one toner image are formed on the intermediate transfer belt 12.

The intermediate transfer belt 12 is supported by a plurality of roll-shaped members. The intermediate transfer belt 12 is a belt-shaped member that circulates and moves in a direction along an arrow B in the drawing.

In the present exemplary embodiment, a driving roll 121 that is driven by a motor (not shown) and drives the intermediate transfer belt 12 is provided as a roll-shaped member. In addition, a tension roll 122 that applies tension to the intermediate transfer belt 12 is provided. Furthermore, an idle roll 123 that supports the intermediate transfer belt 12 is provided. In addition, a backup roll 132 is provided.

The paper sheet transportation unit 20 is provided with a paper sheet accommodation portion 21 in which a plurality of paper sheets are accommodated in a stacked state and a pickup roll 22 that takes out and transports the paper sheets accommodated in the paper sheet accommodation portion 21.

In addition, the paper sheet transportation unit 20 is provided with a transportation roll 23 that transports, along a paper sheet transportation path 60, a paper sheet taken out by the pickup roll 22 and a guiding unit 24 that guides, to the secondary transfer unit 13, the paper sheet transported by the transportation roll 23.

In addition, the paper sheet transportation unit 20 is provided with a transportation belt 25 that transports a paper sheet after secondary transfer to the fixer 14.

The secondary transfer unit 13 is provided with a secondary transfer roll 134 that is disposed to be in contact with an outer surface of the intermediate transfer belt 12 and the backup roll 132 that is disposed on an inner side of the intermediate transfer belt 12 and that forms an electrode facing the secondary transfer roll 134.

In addition, in the present exemplary embodiment, a power supply roll 133 made of a metal, which applies a secondary transfer bias to the backup roll 132, is provided.

At the secondary transfer unit 13, toner images that are formed on the intermediate transfer belt 12 are transferred onto a paper sheet transported to the secondary transfer unit 13.

The fixer 14 is disposed downstream of the secondary transfer unit 13 in the paper sheet transportation direction. The fixer 14 is provided with a fixation roll 141 having a heating source (not shown) and a pressing roll 142 that is provided to face the fixation roll 141 and that presses the fixation roll 141.

In the present exemplary embodiment, a paper sheet passing through the secondary transfer unit 13 is transported to a space between the fixation roll 141 and the pressing roll 142 and unfixed toner images on the paper sheet are melted and then fixed onto the paper sheet. Accordingly, an image consisting of the toner images is formed on the paper sheet.

In addition, in the image forming apparatus 100 of the present exemplary embodiment, images are formed on both surfaces of a paper sheet and an inversion transportation path 61 used for formation of images on both surfaces of a paper sheet is provided.

The inversion transportation path 61 is provided to branch off from the paper sheet transportation path 60 at a position downstream of the fixer 14. In a case where a connection portion 2A between the inversion transportation path 61 and the paper sheet transportation path 60 is a point at which the inversion transportation path 61 starts, the inversion transportation path 61 extends leftward in the drawing and then joins the paper sheet transportation path 60 at a position upstream of the secondary transfer unit 13.

In a case where images are to be formed on both surfaces of a paper sheet, a paper sheet with an image formed on one surface thereof is once transported to a position downstream of the connection portion 2A. Thereafter, the paper sheet transportation direction is reversed and the paper sheet is fed to the inversion transportation path 61 with an end portion of the paper sheet, which is positioned at a rear end portion in the paper sheet transportation direction until the paper sheet transportation direction is reversed, serving as a leading end.

Then, the paper sheet is supplied to the secondary transfer unit 13 again via the inversion transportation path 61.

Accordingly, a toner image is transferred to the other surface of the paper sheet at the secondary transfer unit 13. Thereafter, the paper sheet is directed to the fixer 14 and the toner image is fixed to the paper sheet at the fixer 14. Through such a process, images are formed on both surfaces of a paper sheet.

Note that the way in which images are formed on both surfaces of a paper sheet is not limited thereto. For example, image formation units may be provided to respectively correspond to one surface and the other surface of a paper sheet and images may be formed on both surfaces of a paper sheet by means of the image formation units respectively provided for surfaces of a paper sheet.

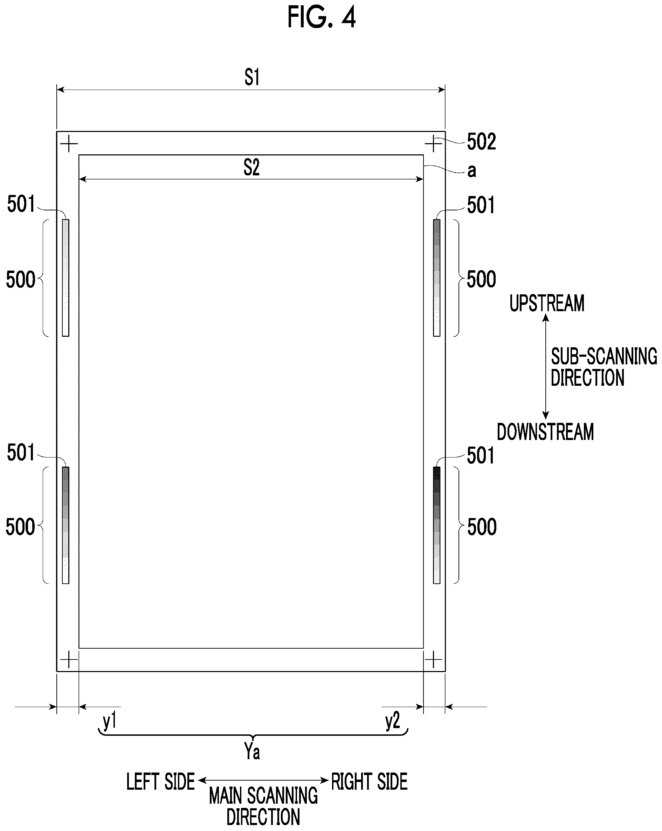

FIG. 4 is a view for description of tone patches formed on a paper sheet. A sub-scanning direction shown in FIG. 4 is a direction in which the paper sheet is transported at the paper sheet transportation unit 20. The paper sheet is transported from an upstream side in the sub-scanning direction, and then is transported to a downstream side. In addition, a main scanning direction shown in FIG. 4 is a direction in which the inspection apparatus 200 reads the paper sheet and is a direction orthogonal to the sub-scanning direction. The inspection apparatus 200 may read the paper sheet starting from a left side or may read the paper sheet starting from a right side.

In FIG. 4, a plurality of tone patches 500 for correction of the density of a predetermined color in image formation are formed. The plurality of tone patches 500 are composed of individual tone patches 501 each having the predetermined color and a predetermined density. The individual tone patches 501 are formed for correction regarding a predetermined density formed in each of the individual tone patches 501. In addition, in FIG. 4, alignment trim marks 502 for specification of the individual tone patches 501 are formed. The predetermined color is a color used for image formation, and examples of the predetermined color include magenta, cyan, yellow, and black. Note that the individual tone patches 501 and the alignment trim marks 502 are formed by the image formation unit 10 of the image forming apparatus 100.

Regarding the plurality of tone patches 500, two tone patches 500 are disposed on an end portion side of the paper sheet that is on the left side in the main scanning direction. In addition, regarding the plurality of tone patches 500, two tone patches 500 are disposed on an end portion side of the paper sheet that is on the right side in the main scanning direction. Each of the individual tone patches 501 is configured in a rectangular shape. The individual tone patches 501 are continuously arranged in the sub-scanning direction based on the densities thereof. For example, the individual tone patches 501 are arranged in decreasing order of the density of the predetermined color, from the upstream side to the downstream side in the sub-scanning direction. Note that the individual tone patches 501 may be simply referred to as "the tone patches 501".

In addition, in FIG. 4, a paper sheet size S1, which is the width of the paper sheet, is shown. The paper sheet size S1 is a distance from an end portion of the paper sheet that is on the left side in the main scanning direction to an end portion of the paper sheet that is on the right side in the main scanning direction. For example, in a case of a paper sheet having a size of A3 determined by the JIS standard, examples of the paper sheet size include 297 mm. In addition, examples of the paper sheet size include 330 mm as a predetermined value. The paper sheet size is stored in advance in the secondary storage unit 19.

Furthermore, in FIG. 4, a document region a, which is a predetermined inner region of the paper sheet, is shown. The document region a is, for example, a region that remains after the paper sheet is processed. In addition, the document region a is, for example, a region that can be designated by a customer as a region for image formation. The document region a is stored in advance in the secondary storage unit 19.

In addition, a document size S2 is shown as the horizontal width of the document region a. The document size S2 is a distance from an end portion of the document region a that is on the left side in the main scanning direction to an end portion of the document region a that is on the right side in the main scanning direction. Examples of the document size include 280 mm and 318 mm.

In addition, in FIG. 4, a margin size Ya indicating an area between the document region a and the paper sheet is shown. In addition, the margin size Ya corresponds to a region of the paper sheet that remains after the document size S2 is subtracted from the paper sheet size S1. The margin size Ya is a region obtained by adding a margin size y1 on the left side in the main scanning direction to a margin size y2 on the right side in the main scanning direction. The margin size y1 on the left side is a distance between the end portion of the document region a that is on the left side in the main scanning direction and the end portion of the paper sheet that is on the left side in the main scanning direction. In addition, the margin size y2 on the right side is a distance between the end portion of the document region a that is on the right side in the main scanning direction and the end portion of the paper sheet that is on the right side in the main scanning direction. The margin size y1 on the left side and the margin size y2 on the right side are values that vary depending on the value of the document size S2 and the value of the paper sheet size S1.

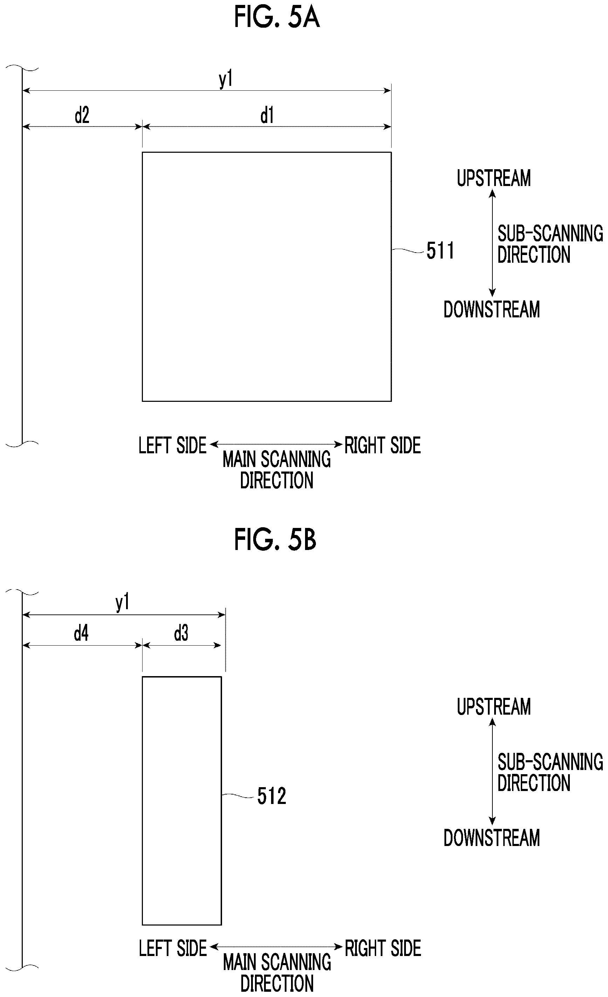

FIGS. 5A and 5B are views for description of an example of the individual tone patch 501 to be formed on a paper sheet. FIGS. 5A and 5B are views for description of the tone patch 501 that is on the upstream side in the sub-scanning direction and is on the left side in the main scanning direction. In FIGS. 5A and 5B, an end portion of the paper sheet that is on the left side in the main scanning direction is shown. FIG. 5A is a view for description of a standard patch which is the tone patch 501 having a standard size. FIG. 5B is a view for description of a narrow patch which is the tone patch 501 that is narrow. The standard patch is a patch having a patch width larger than the patch width of the narrow patch.

In FIG. 5A, the standard patch 511 is formed. In addition, in FIG. 5A, the margin size y1 on the left side is shown. The margin size y1 is, for example, 10 mm. In FIG. 5A, the standard patch 511 is formed. In addition, in FIG. 5A, a patch width d1 of the standard patch 511 is shown. The patch width d1 of the standard patch 511 is a length from an end portion of the standard patch 511 that is on the left side in the main scanning direction to an end portion of the standard patch 511 that is on the right side in the main scanning direction. The patch width of the standard patch 511 is, for example, 6 mm. The patch width is stored in the secondary storage unit 19 in advance. Note that a length from an end portion of the standard patch 511 that is on the upstream side in the sub-scanning direction to an end portion of the standard patch 511 that is on the downstream side in the sub-scanning direction is, for example, 6 mm. In principle, this length is a value that is not changed and is, for example, 6 mm even in the case of the narrow patch 512 described later.

In addition, in FIG. 5A, a distance d2 from a paper sheet end to a patch end is shown. The distance d2 is a distance from an end portion of the paper sheet that is on the left side in the main scanning direction to the end portion of the standard patch 511 that is on the left side in the main scanning direction. The distance d2 is, for example, 3 mm. In principle, this distance d2 is a fixed value regardless of a patch width. This distance d2 is stored in the secondary storage unit 19 in advance.

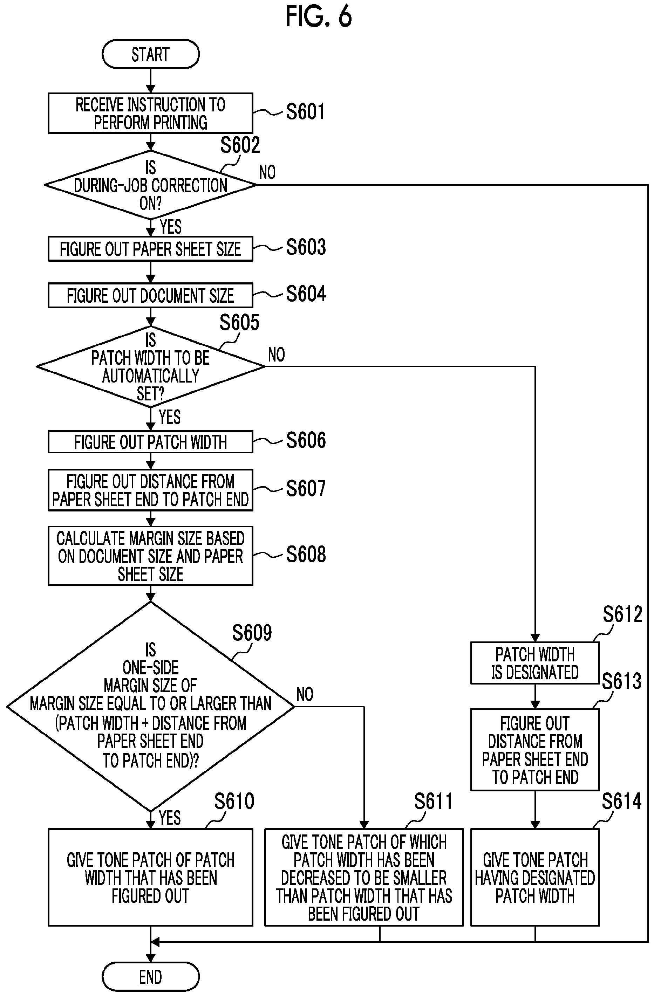

This distance d2 is a region generally determined by an administrator or the like as a region where no image is formed on the paper sheet. In addition, a region of the paper sheet other than such a region is determined in advance by the administrator or the like as a region in which an image can be formed on the paper sheet. In a case where a patch width is to be determined in FIG. 6 which will be described later, the control unit 40 causes the tone patch 501 to be positioned within the region in which an image can be formed. Note that the region in which an image can be formed on the paper sheet is an example of an image-formable region.

Note that the distance d2 from the paper sheet end to the patch end may be a distance from an end portion of the paper sheet that is on one side to an end portion of the standard patch 511 that is on an end portion side of the paper sheet. For example, a case where the standard patch 511 is present at the end portion of the paper sheet that is on the right side in the main scanning direction will be assumed. In this case, the distance d2 from the paper sheet end to the patch end is a distance from the end portion of the paper sheet that is on the right side in the main scanning direction to the end portion of the standard patch 511 that is on the right side in the main scanning direction.

Note that in FIG. 5A, a bleed region for formation of an image outside the document region a may be provided between the document region a and an end portion of the standard patch 511. A guide mark for specification of the position of the standard patch 511 may be provided between an end portion of the paper sheet and an end portion of the standard patch 511.

In FIG. 5B, the narrow patch 512 is formed. In addition, in FIG. 5B, the margin size y1 on the left side is shown. The margin size y1 is smaller than the margin size y1 in FIG. 5A and is, for example, 5 mm. In addition, in FIG. 5B, the patch width of the narrow patch 512 is shown. A patch width d3 of the narrow patch 512 is a length from an end portion of the narrow patch 512 that is on the left side in the main scanning direction to an end portion of the narrow patch 512 that is on the right side in the main scanning direction. The patch width d3 of the narrow patch 512 is, for example, 2 mm. In comparison with the patch width d1 of the standard patch 511, the patch width of the narrow patch 512 is short in a direction toward the left side in the main scanning direction, which is a direction away from the document region a. The patch width is stored in the secondary storage unit 19 in advance. The distance d2 from the paper sheet end to a patch end is shown. The distance d2 is, for example, 2 mm.

Note that in FIG. 5A, a bleed region for formation of an image outside the document region a may be provided between the document region a and an end portion of the narrow patch 512. A guide mark for specification of the position of the narrow patch 512 may be provided between an end portion of the paper sheet and an end portion of the narrow patch 512.

Note that in a case where it is not particularly necessary to distinguish between the standard patch 511 and the narrow patch 512, the standard patch 511 and the narrow patch 512 may be simply referred to as "the tone patch 501". In addition, in a case where it is not necessary to particularly distinguish between the patch width d1 of the standard patch 511 and the patch width d3 of the narrow patch 512, the patch width d1 and the patch width d3 may be simply referred to as "a patch width".

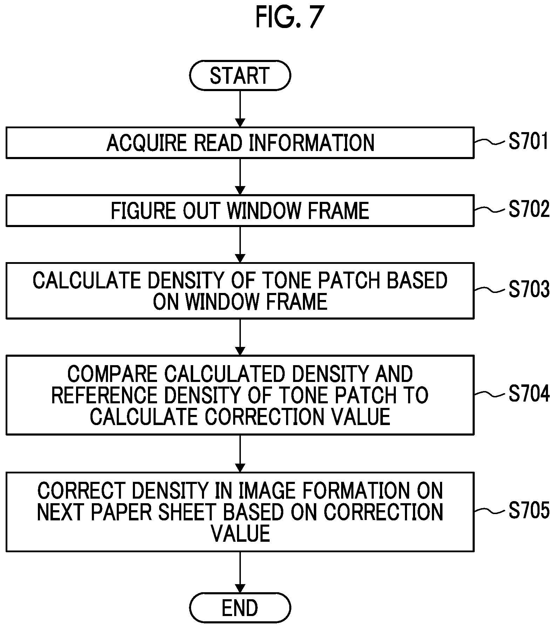

FIGS. 6 and 7 show the flow of processing in the image forming apparatus 100 in the case of during-job correction. The during-job correction is correction performed to suppress a variation in image quality between paper sheets in a case where printing is consecutively performed on the paper sheets in the image forming apparatus 100. FIG. 6 shows the flow of processing until the printing of tone patches. FIG. 7 shows the flow until density correction performed for a paper sheet, on which printing is to be performed next, based on read information of the tone patches.

First, in FIG. 6, the control unit 40 receives an instruction to perform printing on a paper sheet via the display unit 50 (step S601). Then, it is determined whether or not during-job correction of the image forming apparatus 100 is ON (step S602). In a case where the during-job correction is ON (YES in step S602), the paper sheet size S1 is figured out (step S603). The control unit 40 figures out the paper sheet size S1, for example, based on the result of selection performed by a user through the display unit 50. In a case where the during-job correction is not ON (NO in step S602), the processing is terminated.

After the paper sheet size S1 is figured out in step S603, the control unit 40 figures out the document size S2 (step S604). The document size S2 is figured out, for example, by being input by the user. Next, the control unit 40 determines whether or not the patch width is to be automatically set (step S605). In a case where the patch width is to be automatically set (YES in step S605), the control unit 40 figures out the patch width of the tone patch 501 (step S606). For example, the control unit 40 figures out the patch width by acquiring the patch width from the secondary storage unit 19. Next, the control unit 40 figures out the distance d2 from a paper sheet end to a patch end (step S607). The control unit 40 figures out, for example, the distance d2 from the paper sheet end to the patch end by acquiring the distance d2 from the secondary storage unit 19.

Next, the margin size Ya is calculated based on the document size S2 and the paper sheet size S1 (step S608). Then, it is determined whether or not an one-side margin size of the margin size Ya is equal to or larger than (the patch width + the distance d2 from the paper sheet end to the patch end) (step S609). The one-side margin size is, for example, the margin size y1 on the left side or the margin size y2 on the right side. Such determination is performed to determine whether or not the tone patch 501 of the patch width that has been figured out can be positioned within a region of the margin size Ya.

In a case where the one-side margin size of the margin size Ya is equal to or larger than (the patch width + the distance d2 from the paper sheet end to the patch end) (YES in step S609), the tone patch 501 of the patch width that has been figured out is given (step S610). In a case where the one side margin of the margin size Ya is not equal to or larger than (the patch width + the distance d2 from the paper sheet end to the patch end) (NO in step S609), the tone patch 501, of which the patch width has been decreased to be smaller than the patch width that has been figured out, is given (step S611). Processing of decreasing the patch width is performed to cause the entire tone patch 501 to be positioned within a region of the one-side margin size of the margin size Ya. For example, even in a case where the one-side margin size of the margin size Ya is 7 mm, the entire tone patch 501 can be positioned within the region of the one-side margin size with a change from the standard patch 511 to the narrow patch 512. That is, the tone patch 501 can be prevented from being superimposed on the document region a. In addition, since the processing of decreasing the patch width is performed within the image-formable region of the margin size Ya, the distance d2 does not change even in a case where the processing of decreasing the patch width is performed.

In a case where the patch width is not to be automatically set (NO in step S605), the patch width is designated by the user through the display unit 50 (step S612). Then, the distance d2 from the paper sheet end to the patch end is figured out (step S613). Then, a tone patch having the designated patch width is given (step S614).

Next, in FIG. 7, the control unit 40 acquires read information of the tone patch 501 read by the inspection apparatus 200 (step S701). Then, a window frame for calculation of the value of the read information is figured out from the acquired read information (step S702). The window frame is a central region of the tone patch 501, and is a region in which the image quality of the tone patch 501 is stable in comparison with other regions. The window frame is a region in which reading accuracy, which will be described later, is stable in comparison with the other regions.

Then, the density of the tone patch 501 is calculated based on the window frame (step S703). Then, the calculated density and the reference density of the tone patch 501 are compared with each other so that a correction value is calculated (step S704). The reference density is, for example, a value obtained by calculating the density of a tone patch formed on a paper sheet for the first time. In addition, the reference density may be a density predetermined by the user or the like. The reference density of the tone patch 501 is stored in, for example, the secondary storage unit 19. Then, after the correction value is calculated, the density in image formation on the next paper sheet is corrected based on the correction value (step S705). For example, settings for image formation on the next paper sheet are changed to match the density of the tone patch formed on the paper sheet for the first time.

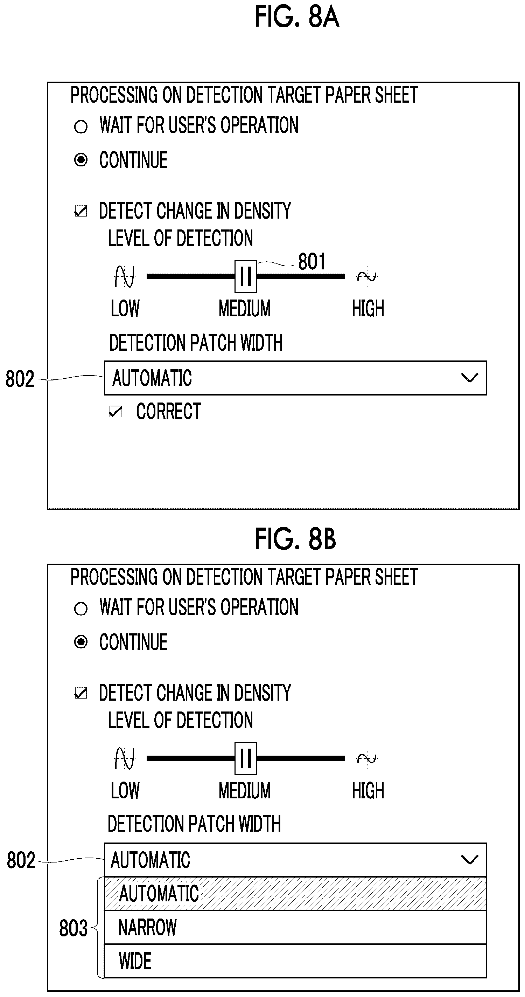

FIGS. 8A and 8B are examples of screens provided to a user in a case where during-job correction is performed. FIG. 8A is a screen provided in a case where the user adjusts settings about a tone patch. FIG. 8B is a screen provided in a case where the user is caused to select settings about a patch width.

In FIG. 8A, an adjustment bar 801 for adjustment of the level of detection of a change in density of a tone patch is displayed. In addition, a patch setting button 802 for the selecting of settings about a detection patch width is displayed. A change in density is generally a density difference obtained in a case where the reference density and a calculated density are compared with each other. In a case where the level of detection of a change in density is made high, the influence of a density difference on correction is large in comparison with a case where the level of detection of a change in density is medium. In addition, in a case where the level of detection of a change in density is made low, the influence of a density difference on correction is small in comparison with a case where the level of detection of a change in density is medium. For example, the user can adjust the level of detection of a change in density by scrolling the adjustment bar 801 rightward and leftward.

Then, for example, in a case where the user presses the patch setting button 802, a screen as shown FIG. 8B is provided. In FIG. 8B, patch setting candidates 803 are displayed as candidates for the setting of a tone patch, which are to be selected by the user. As the patch setting candidates 803, "automatic", "narrow", and "wide" are displayed. For example, in a case where the user selects "automatic" among the patch setting candidates 803, the control unit 40 starts processing of automatically setting a tone patch described in steps 606 to 611 of FIG. 6. In addition, in a case where the user selects, for example, "narrow" or "wide" among the patch setting candidates 803, the control unit 40 starts processing in step S612 and subsequent steps in FIG. 6.

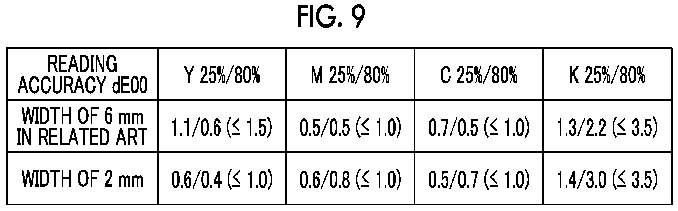

FIG. 9 is a table showing the result of comparison between the standard patch 511 and the narrow patch 512 in terms of reading accuracy. The reading accuracy is an index of consistency between measurement values obtained in a case where the same tone patch 501 is repeatedly measured by the inspection apparatus 200. The smaller the value of the reading accuracy is, the smaller a variation in density is and the higher the reading accuracy is. Note that a measured value is an example of the read information.

In FIG. 9, there are fields of "Y 25%/80%", "M 25%/80%", "C 25%/80%", and "K 25%/80%" as "reading accuracy de00". Y, M, C, and K mean yellow, magenta, cyan, and black, respectively. 25%/80% means reading accuracy achieved in a case where the density of a specific color is 25% and reading accuracy achieved in a case where the density of the specific color is 80%. In addition, in FIG. 9, there are fields of "width of 6 mm in the related art" and "width of 2 mm". The "width of 6 mm in the related art" corresponds to the standard patch 511 and the "width of 2 mm" corresponds to the narrow patch 512.

For example, "1.3/2.2 (≤ 3.5)" is shown as reading accuracy in the case of "K 25%/80%" and "width of 6 mm in the related art". In addition, "1.4/3.0 (≤ 3.5)" is shown as reading accuracy in the case of "K 25%/80%" and "width of 2 mm". In this case, reading accuracy in the case of "width of 6 mm in the related art" is lower than reading accuracy in the case of "width of 2 mm" in both of the case of 25% and the case of 80%. That is, it can be said that a measured value obtained by measuring the standard patch 511 means a lower probability of a variation in density and higher reading accuracy than a measured value obtained by measuring the narrow patch 512.

### <Supplementary Note>

(((1))) An apparatus comprising:
   a processor configured to:
   acquire a recording medium size which is a size of a recording medium on which printing is to be performed;
   acquire a document size which is a size of a document which is a region where printing is performed on the recording medium;
   acquire, based on the recording medium size and the document size, a margin size which is a size of a margin between the recording medium and the document;
   determine, based on the margin size, a width of a tone patch for correction of a density in the printing; and
   cause the apparatus to print the tone patch of the determined width on the recording medium.
(((2))) The apparatus according to (((1))),
   wherein the width of the tone patch is determined based on a value that is determined based on a distance from an end of the recording medium to the tone patch and the width of the tone patch and the margin size.
(((3))) The apparatus according to (((2))),
   wherein the value is determined to be (the distance from the end of the recording medium to the tone patch) × 2, and
   the margin size is determined to be (the recording medium size - the document size) ÷ 2.
(((4))) The apparatus according to (((1))),
   wherein the width of the tone patch is a length in a direction intersecting a direction in which the recording medium is transported.
(((5))) The apparatus according to (((4))),
   wherein the length is a length in a direction from an end of the document to an end of the recording medium.
(((6))) The apparatus according to (((5))),
   wherein the length is 3 mm or less.
(((7))) The apparatus according to (((1))),
   wherein information on an image-formable region in an image forming apparatus that performs printing on the recording medium is acquired, and
   the width of the tone patch is determined such that the tone patch is positioned within the image-formable region of the margin size obtained based on the recording medium size and the document size.
(((8))) The apparatus according to (((7))),
   wherein the document size is a size after processing of the recording medium.

According to the apparatus of (((1))), it is possible to print a tone patch in accordance with a document margin.

According to the apparatus of (((2))), a tone patch that fits in a margin of the recording medium can be stably disposed.

According to the apparatus of (((3))), the width of the tone patch can be determined based on a consistent standard.

According to the apparatus of (((4))), the tone patch can be adjusted in a direction that does not interfere with a printing region.

According to the apparatus of (((5))), the printing region can be prevented from being hindered in a case where the length of the tone patch is adjusted.

According to the apparatus of (((6))), the tone patch can be formed even in a case where a margin is small.

According to the apparatus of (((7))), the tone patch can be printed in a printing-possible region.

According to the apparatus of (((8))), the tone patch can be performed without influence after processing.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

100: image forming apparatus
200: inspection apparatus
10: image formation unit
20: paper sheet transportation unit
40: control unit

## Claims

1. An apparatus comprising:
a processor configured to:
acquire a recording medium size which is a size of a recording medium on which printing is to be performed;
acquire a document size which is a size of a document which is a region where printing is performed on the recording medium;
acquire, based on the recording medium size and the document size, a margin size which is a size of a margin between the recording medium and the document;
determine, based on the margin size, a width of a tone patch for correction of a density in the printing; and
cause the apparatus to print the tone patch of the determined width on the recording medium.

2. The apparatus according to claim 1,
wherein the width of the tone patch is determined based on a value that is determined based on a distance from an end of the recording medium to the tone patch and the width of the tone patch and the margin size.

3. The apparatus according to claim 2,
wherein the value is determined to be (the distance from the end of the recording medium to the tone patch) × 2, and
the margin size is determined to be (the recording medium size - the document size) = 2.

4. The apparatus according to claim 1,
wherein the width of the tone patch is a length in a direction intersecting a direction in which the recording medium is transported.

5. The apparatus according to claim 4,
wherein the length is a length in a direction from an end of the document to an end of the recording medium.

6. The apparatus according to claim 5,
wherein the length is 3 mm or less.

7. The apparatus according to claim 1,
wherein information on an image-formable region in an image forming apparatus that performs printing on the recording medium is acquired, and
the width of the tone patch is determined such that the tone patch is positioned within the image-formable region of the margin size obtained based on the recording medium size and the document size.

8. The apparatus according to claim 7,
wherein the document size is a size after processing of the recording medium.
